# EUROPÄISCHE PATENTSCHRIFT

(11) **EP 4 467 409 B1**
(45) Veröffentlichungstag und Bekanntmachung des Hinweises auf die Patenterteilung: **01.07.2026**
(21) Anmeldenummer: 24176584.1
(22) Anmeldetag: 17.05.2024
(51) Int. Cl.: B60W 40/06, G01C 21/32, H04W 4/44, G08G 1/0967, H04W 4/024, H04W 12/104, H04W 12/65, B60W 30/09, B60W 30/12, B60W 50/02

(54) **VERFAHREN UND VORRICHTUNG ZUR STEUERUNG EINER FAHRFUNKTION EINES KRAFTFAHRZEUGS**
METHOD AND DEVICE FOR CONTROLLING A DRIVING FUNCTION OF A MOTOR VEHICLE
PROCÉDÉ ET DISPOSITIF DE COMMANDE D'UNE FONCTION DE CONDUITE D'UN VÉHICULE AUTOMOBILE

(30) Priorität: 23.05.2023 DE 102023113456
(43) Veröffentlichungstag der Anmeldung: 27.11.2024
(73) Patentinhaber: CARIAD SE, 38440 Wolfsburg (DE); VOLKSWAGEN AG, 38440 Wolfsburg (DE)
(72) Erfinder: Hermann, Bastian, 10405 Berlin (DE); Gasetopulos, Ermis, 10585 Berlin (DE); Münning, Daniel, 38124 Braunschweig (DE)
(74) Vertreter: Hofstetter, Schurack & Partner

(56) Entgegenhaltungen:
- EP-A1- 3 587 209
- DE-A1- 102011 084 633
- DE-A1- 102014 216 018
- DE-A1- 102018 205 322
- DE-A1- 102019 131 118
- DE-A1- 102019 213 185
- DE-A1- 102020 202 163
- US-A1- 2019 384 295
- US-A1- 2022 108 604

## Beschreibung

Die vorliegende Erfindung betrifft ein Verfahren und eine Vorrichtung zur Steuerung einer Fahrfunktion eines Kraftfahrzeugs sowie ein Kraftfahrzeug.

Fortgeschrittene Fahrassistenzsysteme sind in der Lage, verschiedene Informationen im Umfeld eines Kraftfahrzeugs zu erkennen und zu berücksichtigen, wie beispielsweise Spurmarkierungen oder Geschwindigkeitsbegrenzungen. Dabei können jedoch insbesondere bei veralteten Erkennungssystemen Falsch- oder Fehlerkennungen auftreten, was zu einer Falschbedienung durch die Fahrassistenzsysteme führen kann.

Aus der Druckschrift DE 102019 131 118 A1 ist ein System und ein Verfahren zur Bewertung des Betriebs von Umgebungserfassungssystemen von Fahrzeugen bekannt. Die Druckschrift US 2019 / 0 384 295 A1 offenbart ein System und ein Verfahren zur Identifizierung von Erkennungszeichen. In der Druckschrift DE 10 2014 216 018 A1 ist eine Steuervorrichtung, ein Fahrzeug und ein Verfahren beschrieben.

Es ist daher eine Aufgabe der vorliegenden Erfindung, ein verbessertes Verfahren, eine verbesserte Vorrichtung zur Steuerung einer Fahrfunktion eines Kraftfahrzeugs sowie ein verbessertes Kraftfahrzeug abzugeben.

Diese Aufgabe wird gelöst durch die Gegenstände der unabhängigen Ansprüche. Vorteilhafte Weiterbildungen sind in den abhängigen Ansprüchen angegeben.

Gemäß einem ersten Aspekt wird ein Verfahren zur Steuerung einer Fahrfunktion eines Kraftfahrzeugs angegeben. Das erfindungsgemäße Verfahren umfasst dabei die Schritte Erfassen eines Ortes des Kraftfahrzeugs, Erfassen einer Umgebung des Kraftfahrzeugs, Ermitteln einer für eine Fahrfunktion vorgesehenen oder relevanten Information in der Umgebung des Kraftfahrzeugs, Abrufen einer Falsifikationsinformation zu der relevanten Information basierend auf dem Ort von einem von dem Kraftfahrzeug entfernten Datenspeicher und Steuern einer Fahrfunktion basierend auf der Falsifikationsinformation.

Das Verfahren dient insbesondere dazu Fehl- oder Falscherkennungen von im Umfeld des Kraftfahrzeugs vorhandenen Informationen zu ermitteln und die Berücksichtigung dieser Fehlinformationen zu verhindern.

Im Folgenden wird der Begriff Information sowohl im Singular als auch im Plural verwendet, die synonym zueinander sind und in jedem Fall Daten, auch ein einzelnes oder einziges Datum, umfassen sollen.

In einem ersten Schritt des Verfahrens wird ein Ort des Kraftfahrzeugs erfasst.

Der Ort des Kraftfahrzeugs kann über einen Orts- bzw. Positionssensor, wie beispielsweise einem GPS-Sensor, der in dem Kraftfahrzeug vorgesehen ist, erfasst werden. Insbesondere können hierzu auch Kartendaten, die in einem Speicher des Kraftfahrzeugs vorgesehen sind, abgerufen werden. Der Ort umfasst dabei beispielsweise eine oder mehrere Koordinaten und/oder eine Adresse, durch die der Ort bzw. die Position des Kraftfahrzeugs hinreichend genau bestimmt werden kann.

In einem weiteren Schritt wird eine Umgebung des Kraftfahrzeugs erfasst. Insbesondere wird ein Außenraum um das Kraftfahrzeug herum erfasst. Insbesondere umfasst zumindest ein Teil der Umgebung bzw. des Außenraums einen Abschnitt in Fahrtrichtung des Kraftfahrzeugs.

Die Umgebung umfasst insbesondere die Straße, auf der das Kraftfahrzeug sich zum gegenwärtigen Zeitpunkt befindet bzw. fährt, und den, insbesondere rechtsseitig angrenzenden Seitenstreifen bzw. einen rechten Fahrbahnrand. Die Umgebung kann auch eine entgegenkommende Fahrspur, also eine Fahrspur des Gegenverkehrs umfassen.

Die Umgebung kann dabei insbesondere in einem oder mehreren Bildern erfasst werden, beispielsweise durch eine geeignete Bilderfassungsvorrichtung und/oder eine Lidar- und/oder Radarvorrichtung, die insbesondere in Fahrrichtung des Kraftfahrzeugs zeigt bzw. an der Vorderseite des Kraftfahrzeugs angeordnet ist, beispielsweise an einem Kühlergrill und/oder einer vorderen Stoßstange. Insbesondere ist die Erfassungsvorrichtung ausgebildet, regelmäßig, periodisch und/oder kontinuierlich Bilder des Außenraums zu erfassen.

In einem weiteren Schritt wird eine für eine Fahrfunktion des Kraftfahrzeugs relevante Information in der Umgebung des Kraftfahrzeugs ermittelt. Insbesondere wird eine oder mehrere relevante Informationen in dem oder den erfassten Bildern ermittelt. Dies kann insbesondere mittels geeigneter Auswertungs- bzw. Erkennungsalgorithmen erfolgen, beispielsweise über eine Kanten- und/oder Kontrasterkennung, einen Mustervergleich und/oder eine Klassifizierung, insbesondere mithilfe einer künstlichen Intelligenz.

Eine für das Kraftfahrzeug relevante Information ist insbesondere eine Information, die eine Steuerung des Kraftfahrzeugs und/oder eine Steuerung einer Fahrfunktion betrifft. Insbesondere handelt es sich bei der für das Kraftfahrzeug relevanten Information um eine Information, die in der Umgebung aufgestellt ist und eine Fahrt und/oder eine Sicherheit des Kraftfahrzeugs betrifft. Beispielsweise handelt es sich bei der für das Kraftfahrzeug relevanten Information um eine Markierung, eine Begrenzung, ein Lichtzeichen und/oder ein Schild, insbesondere ein Gebots- oder Verbotsschild, das insbesondere den Betrieb und/oder die Fahrt des Kraftfahrzeugs beeinflusst bzw. betrifft. Beispielsweise handelt es sich bei der relevanten Information um eine Geschwindigkeitsbegrenzung, eine Ampel und/oder eine Bodenmarkierung.

Insbesondere handelt es sich bei der für das Kraftfahrzeug relevanten Information um eine vermeintlich relevante Information oder eine Information, die zunächst bzw. vorläufig als relevant beurteilt wird, dies aber möglicherweise gar nicht ist.

Beispielsweise handelt es sich bei der ermittelten Information vermeintlich um eine Geschwindigkeitsbegrenzung, tatsächlich aber um ein Werbeplakat, das eine Geschwindigkeitsbegrenzung zum Verwechseln ähnlichsieht. Wieder beispielsweise handelt es sich bei der ermittelten Information vermeintlich um eine Spurbegrenzung, tatsächlich aber um eine Teernaht, eine Reflexion und/oder eine ungültige Baustellenmarkierung, die einer gültigen Bodenmarkierung zum Verwechseln ähnlichsieht. Wieder beispielsweise handelt es sich bei der ermittelten Information vermeintlich um eine Ampel, insbesondere die rot oder grün zeigt, tatsächlich aber um ein Werbeplakat, das einer Ampel zum Verwechseln ähnlichsieht. Auch beispielsweise handelt es sich bei der ermittelten Information vermeintlich um eine Geschwindigkeitsbegrenzung, die die Fahrspur des Kraftfahrzeugs betrifft, tatsächlich aber um eine Geschwindigkeitsbegrenzung, die eine andere Fahrspur, beispielsweise eine Abbiegespur betrifft, auf der sich das Kraftfahrzeug nicht befindet und die daher hierfür nicht gilt. Diese vermeintlich relevanten Informationen oder Objekte können auch als Geisterobjekte bezeichnet werden.

Diese Differenz in der vermeintlichen und tatsächlichen Relevanz wird dann erfindungsgemäß verifiziert oder falsifiziert, wie dies im Folgenden beschrieben wird. Dies muss insbesondere deshalb geschehen, weil die Erfassungsvorrichtung und/oder die Auswertungsalgorithmen nicht leistungsfähig genug sind, um diese falsche bzw. nicht vorhandene Relevanz der Information als solche zu erkennen, zumindest nicht zuverlässig.

In einem weiteren Schritt wird dann eine Falsifikationsinformation zu der relevanten Information basierend auf dem Ort von einem von dem Kraftfahrzeug entfernten Datenspeicher abgerufen.

Der von dem Kraftfahrzeug entfernte Datenspeicher ist dabei beispielsweise in einem Rechenzentrum oder einer Verarbeitungseinrichtung angeordnet und umfasst Falsifikationsinformationen und optional auch Verifikationsinformationen zu einem oder mehreren Orten.

Das Abrufen, das auch als Empfangen bezeichnet werden kann, erfolgt dabei über eine geeignete Kommunikationseinrichtung des Kraftfahrzeugs, insbesondere eine drahtlose Kommunikationseinrichtung, wie beispielsweise eine Mobilfunk-, insbesondere 3G, 4G, 5G, Bluetooth-, WLAN- und/oder Car2X-Schnittstelle.

Eine Falsifikationsinformation ist dabei insbesondere eine Information oder ein Datum, wie beispielsweise ein Flag oder eine Klassifizierung der bestimmten, vermeintlich relevanten Information als falsch und/oder als irrelevant. Dazu können zu verschiedenen Orten und/oder verschiedenen relevanten Informationen in dem Datenspeicher die Relevanz oder Irrelevanz hinterlegt sein, insbesondere zusammen mit weitergehenden Informationen, wie der genauen Position, der Art und/oder der Beschaffenheit der vermeintlich relevanten Information.

In einem weiteren Schritt wird eine Fahrfunktion basierend auf der Falsifikationsinformation gesteuert.

Eine Fahrfunktion kann beispielsweise einen Antrieb oder eine Lenkung umfassen. Insbesondere umfasst eine Fahrfunktion eine Assistenzfunktion, wie beispielsweise einen Spurhaltungsassistenten, einen Kollisionsverhinderungsassistenten und/oder einen Notbremsassistenten. Weiter insbesondere kann eine Fahrfunktion auch eine teilweise oder vollständig autonome Fahrfunktion, Fahrassistenzfunktion bzw. Fahrunterstützung umfassen.

Ein Steuern der Fahrfunktion kann beispielsweise ein Beschleunigen, ein Abbremsen und/oder ein Lenken umfassen, was in Erwiderung auf die Feststellung, dass es sich bei der vermeintlich relevanten Information um eine irrelevante Information handelt, gesteuert werden, insbesondere eingeleitet werden kann.

Zusätzlich kann auch einen Verifikationsinformation abgerufen werden und daraufhin eine gegenteilige Steuerung einer Fahrfunktion eingeleitet bzw. gesteuert werden.

Durch das erfindungsgemäße Verfahren wird es ermöglicht, Fehlerkennungen und insbesondere darauf basierende Fehlbedienungen des Kraftfahrzeugs zuverlässig auszuschließen.

Gemäß einer Weiterbildung basiert die Falsifikationsinformation auf einer Falsifizierung durch ein von dem Kraftfahrzeug verschiedenes Fahrzeug.

Insbesondere ist der entfernte Datenspeicher ausgebildet, Falsifikationsinformationen zu vermeintlich relevanten Informationen und den dazugehörigen Ort von mehreren Kraftfahrzeugen, insbesondere von mehr als 10, mehr als 100 oder mehr als 1000 Kraftfahrzeugen, insbesondere pro Jahr, pro Monat oder pro Tag zu empfangen und zu speichern. Insbesondere empfängt der von dem Kraftfahrzeug entfernte Datenspeicher Falsifikationsinformationen von sämtlichen dazu eingerichteten Kraftfahrzeugen eines Herstellers und/oder Flottenbetreibers.

Weiter insbesondere sind die von dem empfangenden Kraftfahrzeug verschiedenen Fahrzeuge solche Fahrzeuge, die über bessere Erfassungsvorrichtungen und/oder Auswertungsalgorithmen verfügen als das Kraftfahrzeug, insbesondere solche, die leistungsfähig genug sind, um diese falsche bzw. nicht vorhandene Relevanz der Information als solche zu erkennen, insbesondere zuverlässig.

Insbesondere wurde die Falsifikationsinformation durch das verschiedene Fahrzeug festgestellt bzw. ermittelt und an den entfernten Datenspeicher bereitgestellt, weiter insbesondere, bevor das Kraftfahrzeug die Falsifikationsinformation abgerufen hat.

Durch diese Weiterbildung können auch von Kraftfahrzeugen, die über schlechtere Erfassungsvorrichtungen und/oder Auswertungsalgorithmen verfügen, mittelbar zuverlässig Erkennungen von relevanten Informationen ermöglicht werden.

Gemäß einer Weiterbildung basiert die Falsifikationsinformation auf einem manuellen Fahreingriff eines Fahrers eines von dem Kraftfahrzeug verschiedenes Fahrzeug.

Ein manueller Fahreingriff des Fahrers umfasst vorliegend ein Gegensteuern, ein Bremsen oder Beschleunigen, insbesondere im Gegensatz zur Funktion bzw. einem Betrieb einer Assistenzfunktion. Insbesondere umfasst der manuelle Fahreingriff ein Ausschalten einer Fahrassistenzfunktion bzw. ein zu der Funktion der Fahrassistenzfunktion gegenteiliges Handeln.

Auch diese Falsifikationsinformation und insbesondere der damit verbundene Fahreingriff sowie auch dessen Umfang kann an den entfernten Datenspeicher bereitgestellt werden, weiter insbesondere, bevor das Kraftfahrzeug die Falsifikationsinformation abgerufen hat.

Durch diese Weiterbildung wird es ermöglicht, die Falsifikationsinformationen besonders einfach zu ermitteln.

Gemäß einer Weiterbildung basiert die Falsifikationsinformation auf einer Nichtermittlung einer für eine Fahrfunktion relevanten Information durch ein von dem Kraftfahrzeug verschiedenes Fahrzeug.

Insbesondere kann ein von dem Kraftfahrzeug verschiedenes Fahrzeug an einem bestimmten Ort eine vermeintlich relevante Information abrufen, jedoch durch die in dem Fahrzeug vorhandenen besseren Erfassungsvorrichtungen und/oder Auswertungsalgorithmen erkennen, dass es sich bei der abgerufenen Information um eine falsche, das bedeutet nur vermeintlich relevante Information handelt. Insbesondere wurden vorliegend zuvor vermeintlich relevante Informationen erfasst, die sich jedoch im Nachhinein als tatsächlich irrelevant herausgestellt habe. Das von dem Kraftfahrzeug verschiedene Fahrzeug falsifiziert damit die Information.

Auch diese Falsifikationsinformation und insbesondere die damit verbundene Nichtermittlung sowie auch deren Umfang kann an den entfernten Datenspeicher bereitgestellt werden, weiter insbesondere, bevor das Kraftfahrzeug die Falsifikationsinformation abgerufen hat.

Auch durch diese Weiterbildung wird es ermöglicht, die Falsifikationsinformationen besonders einfach zu ermitteln.

Gemäß einer Weiterbildung basiert die Falsifikationsinformation auf einer Änderung einer für eine Fahrfunktion relevanten Information in dem entfernten Datenspeicher.

Insbesondere wurde vorliegende eine zuvor als relevante Information als irrelevant bzw. nicht relevant gekennzeichnet. Dies kann insbesondere aufgrund eines manuellen Benutzereingriffs durch eine datenverwaltende Person erfolgen oder durch einen Algorithmus, insbesondere eine künstliche Intelligenz, die Abweichungen, Irregularitäten und/oder Unterschiede bei bereitgestellten Daten durch das Kraftfahrzeug und insbesondere davon verschiedene Fahrzeuge erkennt und/oder auswertet.

Dies kann insbesondere auch erfolgen, bevor das Kraftfahrzeug die Falsifikationsinformation abgerufen hat.

Auch durch diese Weiterbildung wird es ermöglicht, die Falsifikationsinformationen besonders einfach zu ermitteln.

Gemäß einer Weiterbildung umfasst das Steuern der Fahrfunktion ein Ignorieren der relevanten Information.

Ein Ignorieren der relevanten Fahrfunktion meint vorliegend insbesondere die Erkenntnis, dass es sich um eine vermeintlich relevante Information handelt, die zwar zuvor als eine relevante Information ermittelt wurde und so eigentlich eine Steuerung der Fahrfunktion bedingen müsste, jedoch nun nicht für eine Steuerung der Fahrfunktion zugrunde gelegt wird.

Insbesondere wird vorliegend eine Fahrfunktion unter Ausschluss der vermeintlich relevanten Information gesteuert. Weiter insbesondere wird eine Fahrfunktion nicht ausgelöst trotz Kenntnis der vermeintlich relevanten Information.

Auch durch diese Weiterbildung wird es ermöglicht, die Falsifikationsinformationen besonders einfach zu ermitteln.

Gemäß einer Weiterbildung umfasst das Steuern der Fahrfunktion ein Deaktivieren einer Fahrassistenzfunktion des Kraftfahrzeugs.

Eine Fahrassistenzfunktion kann beispielsweise einen Spurhaltungsassistenten, einen Kollisionsverhinderungsassistenten, einen Geschwindigkeitsregelassistenten und/oder einen Notbremsassistenten umfassen. Weiter insbesondere kann eine Fahrassistenzfunktion auch eine teilweise oder vollständig autonome Fahrfunktion, Fahrassistenzfunktion bzw. Fahrunterstützung umfassen.

Ein Deaktivieren meint vorliegend insbesondere das Abschalten einer zuvor aktivierten Fahrassistenzfunktion oder ein Unterdrücken eines Anschaltens einer Fahrassistenzfunktion.

Insbesondere kann dadurch, dass eine vermeintlich relevante Information als solche erkannt wird, eine solche Assistenzfunktion, insbesondere vorübergehend, ausgeschaltet bzw. nicht eingeschaltet werden. Beispielsweise kann eine vermeintliche Geschwindigkeitsbegrenzung von einem Geschwindigkeitsregelassistenten ignoriert werden oder eine vermeintliche Spurbegrenzung von einem Spurhaltungsassistenten ignoriert werden.

Durch diese Weiterbildung wird es ermöglicht, besonders effizient auf die Falsifikationsinformation zu reagieren. So wird eine besonders sichere Fahrt ermöglicht.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Gemäß einem weiteren Aspekt wird eine Vorrichtung angegeben. Die Vorrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen.

Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Die Prozessoreinrichtung kann z.B. auf zumindest einer Schaltungsplatine und/oder auf zumindest einem SoC (System on Chip) basieren.

Gemäß einem weiteren Aspekt wird ein Kraftfahrzeug angegeben, das eine solche Vorrichtung umfasst.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Als eine weitere Lösung umfasst die Erfindung auch ein computerlesbares Speichermedium, umfassend Programmcode, der bei der Ausführung durch einen Computer oder einen Computerverbund diesen veranlasst, eine Ausführungsform des erfindungsgemäßen Verfahrens auszuführen. Das Speichermedium kann zumindest teilweise als ein nicht-flüchtiger Datenspeicher (z.B. als eine Flash-Speicher und/oder als SSD - solid state drive) und/oder zumindest teilweise als ein flüchtiger Datenspeicher (z.B. als ein RAM - random access memory) bereitgestellt sein. Das Speichermedium kann in dem Computer oder Computerverbund angeordnet sein. Das Speichermedium kann aber auch beispielsweise als sogenannter Appstore-Server und/oder Cloud-Server im Internet betrieben sein. Durch den Computer oder Computerverbund kann eine Prozessorschaltung mit beispielsweise zumindest einem Mikroprozessor bereitgestellt sein. Der Programmcode kann als Binärcode und/oder als Assembler-Code und/oder als Quellcode einer Programmiersprache (z.B. C) und/oder als Programmskript (z.B. Python) bereitgestellt sein.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Bezüglich der Ausführungsformen der Vorrichtung, des Kraftfahrzeugs und des Speichermediums sowie der dazugehörigen Vorteile wird auf die zuvor beschriebenen Ausführungsformen des Verfahrens und die diesbezüglichen Vorteile verwiesen.

Im Folgenden sind Ausführungsbeispiele der Erfindung beschrieben. Hierzu zeigt:

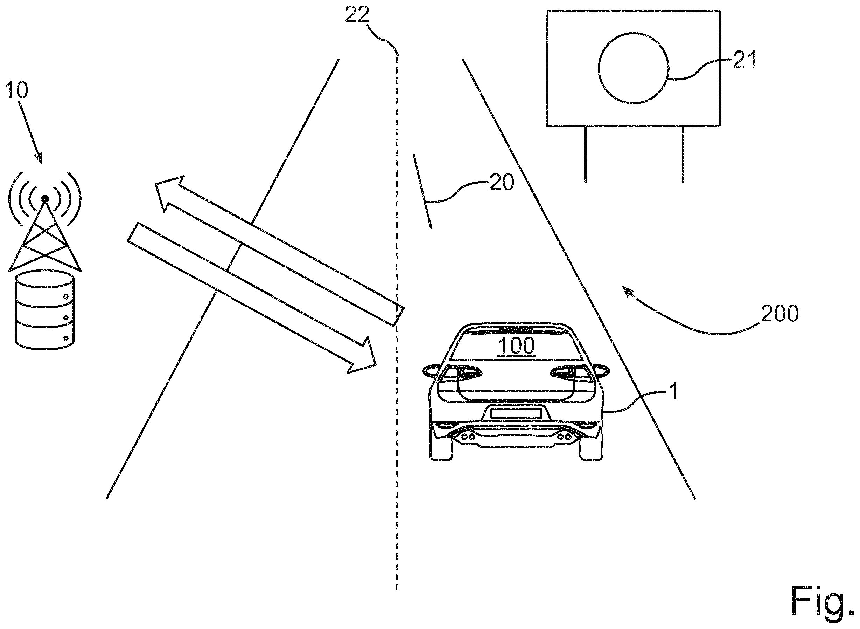

- Fig. 1: eine schematische Ansicht einer Ausführungsform eines Verfahrens und einer Vorrichtung zur Steuerung einer Fahrfunktion eines Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

Fig. 1 zeigt eine schematische Ansicht einer Ausführungsform eines Verfahrens und einer Vorrichtung 100 zur Steuerung einer Fahrfunktion eines Kraftfahrzeugs 1.

Die Vorrichtung 100 zur Fahrunterstützung eines Kraftfahrzeugs 1 ist dabei in bzw. an dem Kraftfahrzeug 1 angeordnet und umfasst dabei Mittel, die ausgebildet sind, ein Verfahren zur Fahrunterstützung auszuführen. Insbesondere umfasst die Vorrichtung 100 eine oder mehrere Erfassungsmittel, die ausgebildet sind, eine Umgebung 200 des Kraftfahrzeugs 1 und einen Ort des Kraftfahrzeugs 1 zu erfassen.

Die Vorrichtung 100 ist auch ausgebildet, für eine Fahrfunktion relevante Information 20, 21 in der Umgebung 200 des Kraftfahrzeugs 1 zu ermitteln.

Bei den, zunächst als relevanten Informationen handelt es sich sowohl um eine Bodenmarkierung 20 als auch ein Geschwindigkeitsbegrenzungsschild 21. Diese relevanten Informationen sind jedoch nur vermeintlich relevant und tatsächlich für das Kraftfahrzeug bzw. dessen Fahrfunktion irrelevant. Tatsächlich handelt es sich bei der Bodenmarkierung 20 um eine Teer-Naht und bei dem Geschwindigkeitsbegrenzungsschild 21 um eine Werbeanzeige.

Dazu ist die Vorrichtung 100 weiter ausgebildet, eine Falsifikationsinformation zu der relevanten Information 20, 21 basierend auf dem Ort von einem von dem Kraftfahrzeug 1 entfernten Datenspeicher 10 abzurufen und eine Fahrfunktion basierend auf der Falsifikationsinformation zu steuern.

Die Spurbegrenzung 22 wird ebenfalls zunächst als relevante Information ermittelt, wobei hierzu keine Falsifikationsinformation abgerufen werden kann, weil diese nicht existiert. Vielmehr wird hierzu eine Verifikationsinformation von dem entfernten Datenspeicher 10 abgerufen, die die Information als relevanten Information verifiziert.

Dabei kann die Falsifikationsinformation auf einer Falsifizierung durch ein von dem Kraftfahrzeug 1 verschiedenes Fahrzeug, auf einem manuellen Fahreingriff eines Fahrers eines von dem Kraftfahrzeug 1 verschiedenen Fahrzeugs, auf einer Nichtermittlung einer für eine Fahrfunktion relevanten Information 20, 21 eines von dem Kraftfahrzeug 1 verschiedenen Fahrzeugs oder auf einer Änderung einer für eine Fahrfunktion relevanten Information in dem entfernten Datenspeicher 10 basieren.

Das Steuern der Fahrfunktion kann dabei ein Ignorieren der relevanten Information oder ein Deaktivieren einer Fahrassistenzfunktion des Kraftfahrzeugs 1 umfassen.

Insgesamt zeigen die Beispiele, wie vermeintlich relevante Informationen für eine Fahrfunktion eines Kraftfahrzeugs zuverlässig falsifiziert oder verifiziert werden können.

## Patentansprüche

1. Verfahren zur Steuerung einer Fahrfunktion eines Kraftfahrzeugs (1), umfassend:
- Erfassen eines Ortes des Kraftfahrzeugs (1);
- Erfassen einer Umgebung (100) des Kraftfahrzeugs (1);
- Ermitteln einer für eine Fahrfunktion relevanten Information (20, 21) in der Umgebung (200) des Kraftfahrzeugs (1);
**gekennzeichnet durch**:
- Abrufen einer Falsifikationsinformation zu der relevanten Information (20, 21) basierend auf dem Ort von einem von dem Kraftfahrzeug (1) entfernten Datenspeicher (10); und
- Steuern einer Fahrfunktion basierend auf der Falsifikationsinformation.

2. Verfahren nach Anspruch 1,
wobei die Falsifikationsinformation auf einer Falsifizierung durch ein von dem Kraftfahrzeug (1) verschiedenes Fahrzeug basiert.

3. Verfahren nach einem der vorhergehenden Ansprüche,
wobei die Falsifikationsinformation auf einem manuellen Fahreingriff eines Fahrers eines von dem Kraftfahrzeug (1) verschiedenen Fahrzeugs basiert.

4. Verfahren nach einem der vorhergehenden Ansprüche,
wobei die Falsifikationsinformation auf einer Nichtermittlung einer für eine Fahrfunktion relevanten Information (20, 21) eines von dem Kraftfahrzeug (1) verschiedenen Fahrzeugs basiert.

5. Verfahren nach einem der vorhergehenden Ansprüche,
wobei die Falsifikationsinformation auf einer Änderung einer für eine Fahrfunktion relevanten Information (20, 21) in dem entfernten Datenspeicher (10) basiert.

6. Verfahren nach einem der vorhergehenden Ansprüche,
wobei das Steuern der Fahrfunktion ein Ignorieren der relevanten Information umfasst.

7. Verfahren nach einem der vorhergehenden Ansprüche,
wobei das Steuern der Fahrfunktion ein Deaktivieren einer Fahrassistenzfunktion des Kraftfahrzeugs (1) umfasst.

8. Vorrichtung (100) zur Steuerung einer Fahrfunktion eines Kraftfahrzeugs (1), umfassend Mittel, die ausgebildet sind, ein Verfahren nach einem der Ansprüche 1 bis 7 auszuführen

9. Kraftfahrzeug (1), umfassend eine Vorrichtung nach Anspruch 8.

## Claims

1. A method for controlling a driving function of a motor vehicle (1), comprising:
- capturing a location of the motor vehicle (1);
- capturing an environment (100) of the motor vehicle (1);
- ascertaining information (20, 21) relevant to a driving function in the environment (200) of the motor vehicle (1);
**characterized by**:
- retrieving falsification information to the relevant information (20, 21) from a data memory (10), which is remote from the motor vehicle (1), based on the location; and
- controlling a driving function based on the falsification information.

2. The method according to claim 1,
wherein the falsification information is based on a falsification by a vehicle different from the motor vehicle (1).

3. The method according to any one of the preceding claims,
wherein the falsification information is based on a manual driving intervention of a driver of a vehicle different from the motor vehicle (1).

4. The method according to any one of the preceding claims,
wherein the falsification information is based on non-ascertainment of information (20, 21) relevant to a driving function of a vehicle different from the motor vehicle (1).

5. The method according to any one of the preceding claims,
wherein the falsification information is based on a change of information (20, 21) relevant to a driving function in the remote data memory (10).

6. The method according to any one of the preceding claims,
wherein controlling the driving function includes disregarding the relevant information.

7. The method according to any one of the preceding claims,
wherein controlling the driving function includes deactivating a driving assistance function of the motor vehicle (1).

8. A device (100) for controlling a driving function of a motor vehicle (1), comprising means, which are adapted to execute a method according to any one of claims 1 to 7.

9. A motor vehicle (1) comprising a device according to claim 8.

## Revendications

1. Procédé pour commander une fonction de conduite d'un véhicule à moteur (1) comprenant :
- détecter un emplacement du véhicule à moteur (1) ;
- détecter un environnement (100) du véhicule à moteur (1) ;
- déterminer une information (20, 21) pertinente pour une fonction de conduite dans l'environnement (200) du véhicule à moteur (1) ;
**caractérisé par** :
- récupérer une information de falsification concernant l'information pertinente (20, 21) sur la base de l'emplacement d'une mémoire de données (10) distante du véhicule à moteur (1) ; et
- commander une fonction de conduite sur la base de l'information de falsification.

2. Procédé selon la revendication 1,
dans lequel l'information de falsification est basée sur une falsification par un véhicule différent du véhicule à moteur (1).

3. Procédé selon l'une des revendications précédentes,
dans lequel l'information de falsification est basée sur une intervention de conduite manuelle d'un conducteur d'un véhicule différent du véhicule à moteur (1).

4. Procédé selon l'une des revendications précédentes,
dans lequel l'information de falsification est basée sur une non-détermination d'une information (20, 21) pertinente pour une fonction de conduite d'un véhicule différent du véhicule à moteur (1).

5. Procédé selon l'une des revendications précédentes,
dans lequel l'information de falsification est basée sur une modification d'une information (20, 21) pertinente pour une fonction de conduite dans la mémoire de données distante (10).

6. Procédé selon l'une des revendications précédentes,
dans lequel la commande de la fonction de conduite comprend d'ignorer l'information pertinente.

7. Procédé selon l'une des revendications précédentes,
dans lequel la commande de la fonction de conduite comprend de désactiver une fonction d'aide à la conduite du véhicule à moteur (1).

8. Dispositif (100) pour commander une fonction de conduite d'un véhicule à moteur (1) comprenant des moyens qui sont configurés pour mettre en œuvre un procédé selon l'une des revendications 1 à 7.

9. Véhicule à moteur (1) comprenant un dispositif selon la revendication 8.
